# EUROPÄISCHE PATENTSCHRIFT

(11) **EP 3 600 798 B1**
(45) Veröffentlichungstag und Bekanntmachung des Hinweises auf die Patenterteilung: **16.09.2020**
(21) Anmeldenummer: 19710645.3
(22) Anmeldetag: 07.03.2019
(51) Int. Cl.: B25J 15/04, B25J 9/12, B25J 13/08, B25J 15/02, B23Q 3/06, B23Q 7/14

(54) **GREIF- UND POSITIONIEREINRICHTUNG ZUM TRANSPORT EINER SPANNVORRICHTUNG ZWISCHEN UNTERSCHIEDLICHEN POSITIONEN**
GRIPPING AND POSITIONING ASSEMBLY FOR TRANSPORTING A HOLDING DEVICE BETWEEN DIFFERENT POSITIONS
SYSTÈME DE PRÉHENSION ET DE POSITIONNEMENT SERVANT AU TRANSPORT D'UN DISPOSITIF DE SERRAGE ENTRE DIFFÉRENTES POSITIONS

(30) Priorität: 16.03.2018 DE 102018106210
(43) Veröffentlichungstag der Anmeldung: 05.02.2020
(73) Patentinhaber: Gressel AG, 8355 Aadorf (CH)
(72) Erfinder: ULRICH, Flavio, 8512 Thundorf (CH); SCHLÜSSEL, Marcel, 8303 Bassersdorf (CH); JAUCH, André, 6473 Silenen (CH); RELEA, Eduard, 8708 Männedorf (CH)
(74) Vertreter: Charrier Rapp & Liebau
(86) Internationale Anmeldenummer: PCT/EP2019/055751
(87) Internationale Veröffentlichungsnummer: WO 2019/175024

(56) Entgegenhaltungen:
- WO-A1-2017/025076
- DE-A1-102015 103 653
- JP-A- S5 997 884
- JP-U- S6 094 486
- US-A- 4 766 775
- US-A- 4 897 014
- US-A- 5 118 248
- US-A1- 2017 100 780

## Beschreibung

Die Erfindung betrifft ein Spann- und Handhabungseinrichtung mit einer Spannvorrichtung und einer derartigen Greif- und Positioniereinrichtung sowie ein Verfahren zum Handhaben von Werkstücken.

Aus der DE 10 2015 103 653 A1 ist ein Spannmittelsystem bekannt, bei dem ein mit Spannbacken versehener Spannstock zusammen mit einem an diesen fest gespannten Werkstück über eine als Greifer ausgebildete Greif- und Positioniereinrichtung zwischen einer Ablage und einer Bearbeitungsstelle innerhalb einer Werkzeugmaschine transportiert werden kann. Um die Spannstöcke einzeln oder gruppenweise zusammen mit den fest gespannten Werkstücken einer Bearbeitung zuführen zu können und um die fertig bearbeiteten Werkstücke mit samt ihren Spannstöcken wieder auf einem Transportwagen ablegen zu können, sind die Spannstöcke mit einer Greiferaufhahmekontur versehen. Der zugehörige Greifer weist an zwei gegeneinander beweglichen Greiferfingern eine zu der Greiferaufnahmekontur passende Gegenkontur zur festen Halterung des Spannstocks während eines Transports auf. Durch die als Greifer ausgeführte Greif- und Positioniereinrichtung kann der Spannstock allerdings nur zwischen unterschiedlichen Positionen transportiert, jedoch nicht zum Öffnen oder Schließen der Spannbacken betätigt werden.

Aus der DD 291 280 A5 ist ein Hauptgreifer mit Greiferbacken zur Aufnahme eines Zusatzgreifers bekannt. Der Hauptgreifer weist dabei einen Antrieb zur Betätigung des Zusatzgreifers auf. Der Grundkörper des Zusatzgreifers entspricht dabei der geometrischen Form der Werkstücke. Die Greiferbacken des Hauptgreifers sind dabei ebenfalls entsprechend der Werkstücke ausgestaltet, so dass sowohl die Werkstücke als auch der Grundkörper des Zusatzgreifers mittels der Greiferbacken aufnehmbar sind.

Die JP S59 97884 offenbart eine Spann- und Handhabungseinrichtung mit einer Spannvorrichtung zur festen Halterung eines Werkstücks während eines Transports und einer mit der Spannvorrichtung lösbar verbindbaren Greif- und Positioniereinrichtung zum Transport der Spannvorrichtung zwischen unterschiedlichen Positionen, wobei die Greif- und Positioniereinrichtung eine Kopplungseinrichtung zur lösbaren Verbindung der Greif- und Positioniereinrichtung mit der Spannvorrichtung und festen Halterung der Spannvorrichtung während eines Transports und einen integrierten Antrieb zur Bewegung der Spannvorrichtung zwischen einer Spann-und Lösestellung umfasst, und wobei die Spannvorrichtung als Schraubstock mit einem Grundkörper und mindestens zwei Spannbacken ausgeführt ist und mindestens ein Adapterstück zur Verbindung mit der Kopplungseinrichtung der Greif- und Positioniereinrichtung enthält.

Aufgabe der Erfindung ist es, eine Greif- und Positioniereinrichtung der eingangs genannten Art, eine Spann- und Handhabungseinrichtung mit einer derartigen Greif- und Positioniereinrichtung und eine Verfahren zur Handhabung einer Spannvorrichtung in einer Bearbeitungsmaschine zu schaffen, bei denen neben einem sicheren Transport der Spannvorrichtung zwischen unterschiedlichen Positionen auch eine Betätigung der Spannvorrichtung zwischen einer Spann- und Lösestellung ermöglicht wird.

Diese Aufgabe wird durch eine Spann- und Handhabungseinrichtung mit den Merkmalen des Anspruchs und durch ein Verfahren mit den Merkmalen des Anspruchs 17 gelöst. Zweckmäßige Ausgestaltungen und vorteilhafte Weiterbildungen der Erfindung sind in den Unteransprüchen angegeben.

Die Erfindung betrifft eine Spann- und Handhabungseinrichtung mit einer Spannvorrichtung und einer mit der Spannvorrichtung lösbar verbindbaren Greif- und Positioniereinrichtung zum Transport der Spannvorrichtung zwischen unterschiedlichen Positionen. Die Greif- und Positioniereinrichtung umfasst dabei eine Kopplungseinrichtung zur lösbaren Verbindung der Greif- und Positioniereinrichtung mit der Spannvorrichtung und zur festen Halterung der Spannvorrichtung während eines Transports sowie einen integrierten Antrieb zur Bewegung der Spannvorrichtung zwischen einer Spann- und Lösestellung. Die zu der Greif- und Positioniereinrichtung gehörige Spannvorrichtung ist als Schraubstock mit einem Grundkörper und mindestens zwei Spannbacken ausgeführt. An der Spannvorrichtung ist eine weitere Schnittstelle zur Positionierung und Halterung auf einem Bearbeitungstisch einer Bearbeitungsmaschine oder an einem Schnellwechselsystem vorgesehen. Diese Schnittstelle ist in Form mindestens eines Nullpunkt-Spannelementes ausgebildet.

Weiter weist die Spannvorrichtung eine Schnittstelle in Form mindestens eines an der Spannvorrichtung angeordneten Adapterstücks zur Verbindung mit der Kopplungseinrichtung der Greif- und Positioniereinrichtung auf.

Das Adapterstück kann als gesondertes Bauteil ausgeführt oder z.B. in den Grundkörper der Spannvorrichtung integriert sein. Zweckmäßigerweise können an der Spannvorrichtung zwei gegenüberliegende Adapterstücke zur Verbindung mit einer Kopplungseinrichtung der Greif- und Positioniereinrichtung angeordnet sein.

Weiter kann die Greif- und Positioniereinrichtung wie nachstehend beschrieben ausgebildet sein. Die Greif- und Positioniereinrichtung weist neben einer Kopplungseinrichtung zur lösbaren Verbindung mit einer Spannvorrichtung und zur festen Halterung der Spannvorrichtung während eines Transports einen integrierten Antrieb zur Bewegung der Spannvorrichtung zwischen einer Spann- und Lösestellung auf. Eine solche Greif- und Positioniereinrichtung kann eine Spannvorrichtung somit nicht nur zwischen unterschiedlichen Positionen, z.B. zwischen einer Ablage und einer Bearbeitungsposition innerhalb einer Werkzeugmaschine und zurück, transportieren, sondern kann die Spannvorrichtung in den unterschiedlichen Positionen auch zur Bewegung zwischen einer Spann- und Lösestellung betätigen. Durch die Greif- und Positioniereinrichtung wird somit ermöglicht, dass eine klassische Spannvorrichtung nicht nur zur Halterung eines Werkstücks während einer Bearbeitung sondern auch als Greifeinrichtung für den Transport und die Handhabung von Werkstücken verwendet werden kann. Dies führt zu einem vereinfachten Beladeprozess und kürzeren Rüst- und Stillstandzeiten. Umspann- und Umrüstvorgänge können auch außerhalb des Maschinenraums stattfinden. Außerdem umfasst die Kopplungseinrichtung der Greif- und Positioniereinrichtung eines oder mehrere Ausrichtelemente zur formschlüssigen Verbindung mit der Spannvorrichtung. Dadurch kann die positionsgenaue Verbindung mit der Spannvorrichtung vereinfacht und deren Halterung verbessert werden.

In einer besonders zweckmäßigen Ausführung weist der in der Greif- und Positioniereinrichtung integrierte Antrieb ein motorisch drehbares Kupplungselement zur Kopplung mit einem Verstellelement der Spannvorrichtung zu deren Bewegung zwischen der Spann- und Lösestellung auf. Dadurch kann der Antrieb beim Ankoppeln der Greif- und Positioniereinrichtung an die Spannvorrichtung mit deren Stellelement für die Bewegung zwischen der Spann- und Lösestellung gekoppelt werden.

Das Kupplungselement kann in einer zweckmäßigen Ausführung durch einen Motor über ein z.B. als Kettentrieb ausgeführtes Getriebe drehbar sein. Das Getriebe kann aber auch als Riemen-, Zahnantrieb oder auf andere geeignete Weise ausgeführt sein.

Zur einfachen Verbindung des Kupplungselements mit dem Verstellelement beim Ankoppeln der Greif- und Positioniereinrichtung an der Spannvorrichtung kann das in einem Gehäuse drehbar gelagerte Kupplungselement axial verschiebbar und federnd vorgespannt sein.

Die an der Greif- und Positioniereinrichtung zur lösbaren Verbindung mit der Spannvorrichtung vorgesehene Kopplungseinrichtung kann zweckmäßigerweise eine Verriegelungseinrichtung zur verriegelbaren Halterung der Spannvorrichtung umfassen. Hierzu kann an der Spannvorrichtung eine mit der Kopplungseinrichtung zusammenwirkende Aufnahme vorgesehen sein. Diese kann an einem gesonderten Adapterstück angeordnet oder in der Spannvorrichtung integriert sein. Dadurch kann eine sichere Halterung der Spannvorrichtung während des Transports erreicht werden.

In einer konstruktiv vorteilhaften Ausführung kann die Verriegelungseinrichtung ein mittels eines Kolbens zwischen einer Verriegelungsstellung und einer Entriegelungsstellung bewegbares Verriegelungselement enthalten. Das Verriegelungselement kann als biegsames Blech oder als feste Klinke ausgestaltet sein. Es kann mehrere Öffnungen zur Aufnahme von Verriegelungsnasen am Adapterstück der Spannvorrichtung aufweisen.

In einer weiteren vorteilhaften Ausgestaltung können die Ausrichtelemente der Kopplungseinrichtung z.B. als Keilstege, Zylinderstifte oder Kegelstifte zum Eingriff in keilförmige Einschnitte bzw. zylindrische oder konische Öffnungen ausgebildet sein. Alternativ können die Ausrichteelemente auch als Ausnehmungen zur Aufnahme von Keilstegen oder konusförmigen oder zylinderförmigen Elementen, insbesondere von Zylinderstiften oder Kegelstiften, ausgebildet sein.

Die vorstehend beschriebene Greif- und Positioniereinrichtung kann an einem Industrieroboter befestigt oder Teil eines Industrieroboters sein.

Ein erfindungsgemäßes Verfahren zum Handhaben einer Spannvorrichtung an einer Bearbeitungsmaschine zeichnet sich dadurch aus, dass die Spannvorrichtung zur festen Halterung eines Werkstücks während der Bearbeitung durch eine mit der Spannvorrichtung über eine Kopplungseinrichtung lösbar verbundene Greif- und Positioniereinrichtung mit integrierten Antrieb zur Bewegung der Spannvorrichtung zwischen einer Spann- und einer Lösestellung zu einem Werkstück verfahren wird, dass das Werkstück von der Spannvorrichtung durch Betätigung des in der Greif- und Positioniereinrichtung integrierten Antriebs gegriffen wird und dass die Spannvorrichtung mit dem gegriffenen Werkstück über die Greif- und Positioniereinrichtung zu einer Bearbeitungsposition in der Bearbeitungsmaschine oder zu einem Umspannplatz transportiert wird.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Spann- und Handhabungseinrichtung mit einer Spannvorrichtung und einer Greif- und Positioniereinrichtung in einer Perspektivansicht;
- **Figur 2**: eine Spannvorrichtung von Figur 1 in einer Perspektivansicht;
- **Figur 3**: die Spannvorrichtung von Figur 2 in einer Seitenansicht;
- **Figur 4**: die Spannvorrichtung von Figur 2 mit einem Ausrichtelement ohne Spannbacken;
- **Figur 5**: ein Adapterstück einer Spannvorrichtung;
- **Figur 6**: ein zum Adapterstück von Figur 5 gehörendes Ausrichtelement;
- **Figur 7**: eine Greif- und Positioniereinrichtung in einer Perspektivansicht;
- **Figur 8**: den Antrieb der in Figur 5 gezeigten Greif- und Positioniereinrichtung;
- **Figur 9**: einen Querschnitt der Greif- und Positioniereinrichtung von Figur 7;
- **Figur 10**: einen Querschnitt der Greif- und Positioniereinrichtung von Figur 7 mit einem Adapterstück;
- **Figur 11**: eine vergrößerte Teilansicht des Bereichs A von Figur 10;
- **Figur 12**: ein Verriegelungselement der Greif- und Positioniereinrichtung von Figur 7;
- **Figur 13**: eine Schnittansicht einer weiteren Ausführung einer Spann- und Handhabungseinrichtung mit einer Spannvorrichtung und einer Greif- und Positioniereinrichtung;
- **Figur 14**: eine Ansicht in Richtung der Pfeile A-A von Figur 13;
- **Figur 15**: eine Spann- und Handhabungseinrichtung beim Transport einer Spannvorrichtung mit Werkstück;
- **Figur 16**: eine Spann- und Handhabungseinrichtung beim Transport eines Werkstücks;
- **Figur 17**: eine Spann- und Handhabungseinrichtung bei der Übergabe eines Werkstücks;
- **Figur 18**: eine zweite Ausgestaltung einer Greif- und Positioniereinheit in einer Perspektivansicht;
- **Figur 19**: eine zweite Ausgestaltung einer Spannvorrichtung in einer Perspektivansicht und
- **Figur 20**: das Ausrichteelemente der Greif- und Positioniereinheit nach Figur 18 und das Adapterstück der Spannvorrichtung nach Figur 19.

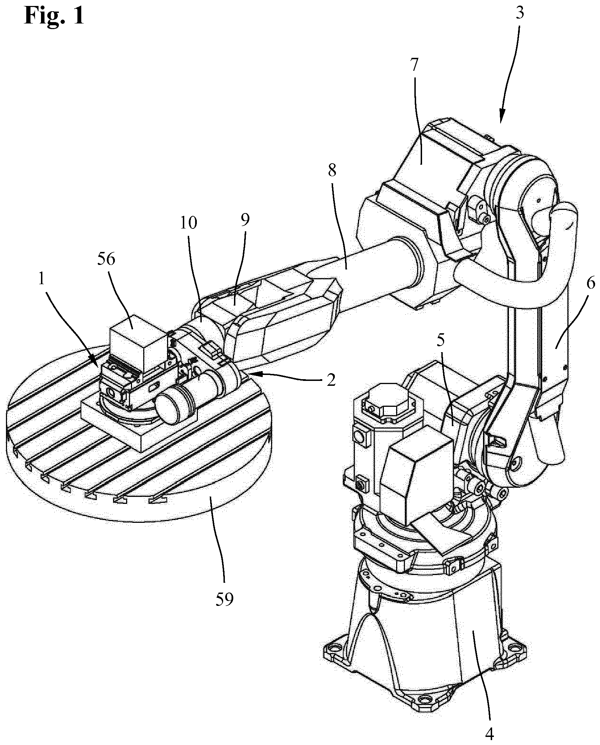

Die in Figur 1 dargestellte Spann- und Handhabungseinrichtung umfasst eine Spannvorrichtung 1 zur festen Halterung eines Werkstücks während der Bearbeitung und eine mit der Spannvorrichtung lösbar verbindbare Greif- und Positioniereinrichtung 2, die mit der Spannvorrichtung 1 zu deren Transport zwischen unterschiedlichen Positionen gekoppelt werden kann. Bei dem gezeigten Ausführungsbeispiel ist die mit der Spannvorrichtung 1 koppelbare Greif- und Positioniereinrichtung 2 an einem hier als Gelenkarmroboter ausgeführten Roboter 3 montiert. Die Greif- und Positioniereinrichtung 2 kann aber auch an einem Portalroboter oder einem anders aufgebauten Transport- bzw. Positioniersystem zur Bewegung der Spannvorrichtung 1 in verschiedenen Richtungen angeordnet sein. Die Greif- und Positioniereinrichtung 2 kann auch Teil eines Industrieroboters oder eines anderen Transport- bzw. Positioniersystems sein.

Der in Figur 1 gezeigte Roboter 3 enthält in an sich bekannter Weise ein Grundgestell oder einen Ständer 4, auf dem ein Karussell 5 um eine als Vertikalachse ausgebildete erste Achse drehbar angeordnet ist. An dem Karussell 5 ist eine Schwinge 6 um eine als Horizontalachse ausgebildete zweite Achse schwenkbar angeordnet. An dem freien Ende der Schwinge 6 ist ein Arm 7 um eine zur zweiten Achse parallele und ebenfalls als Horizontalachse ausgebildete dritte Achse drehbar gelagert Der Arm 7 trägt eine Handanordnung mit einem seitlich vorstehenden ersten Handteil 8, das um eine vierte Achse drehbar am Arm 7 gelagert ist. An dem gabelförmigen freien Ende des ersten Handteils 8 ist ein zweites Handteil 9 um eine zur vierten Achse rechtwinklige fünfte Achse drehbar gelagert. Ein vorderes drittes Handteil 10 kann um eine sechste Achse drehbar an dem zweiten Handteil 9 angeordnet sein. An dem vorderen dritten Handteil 10 ist die mit der Spannvorrichtung 1 koppelbare Greif- und Positioniereinrichtung 2 montiert.

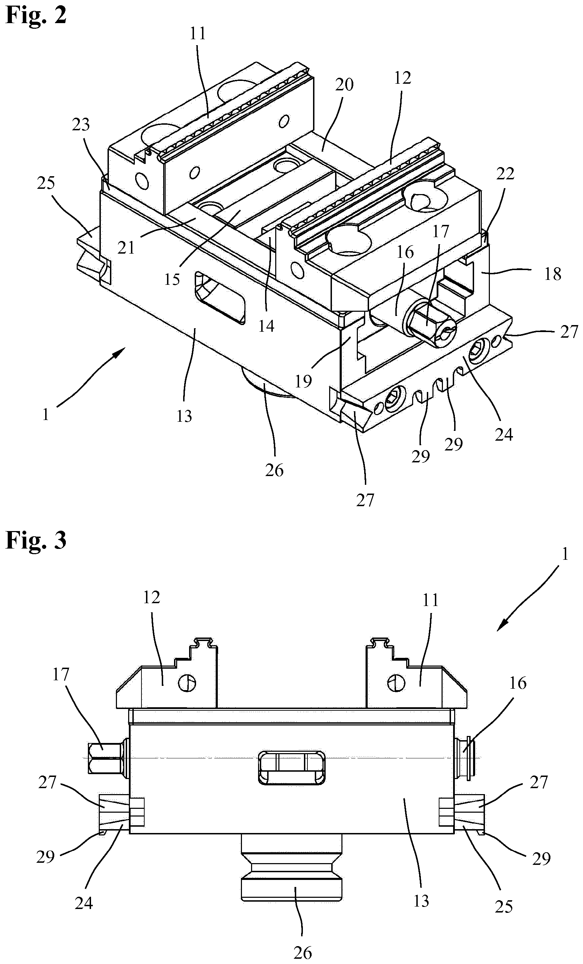

Die in den Figuren 2 und 3 in unterschiedlichen Ansichten dargestellte Spannvorrichtung 1 ist als Zentrisch-Spannvorrichtung mit zwei gegeneinander verstellbaren Spannbacken 11 und 12 ausgeführt. Sie kann aber auch eine feste und eine demgegenüber bewegliche Spannbacke aufweisen oder als Mehrfachspanner mit mehr als zwei Spannbacken ausgeführt sein. Die in dem gezeigten Ausführungsbeispiel als Schraubstock ausgeführte Spannvorrichtung 1 enthält einem Grundkörper 13, an dem die beiden Spannbacken 11 und 12 über Schieber 14 und 15 verschiebbar geführt und durch einen Verstellmechanismus mit einem hier als Verstellspindel ausgebildeten Verstellelement 16 gegenläufig verstellbar sind. Über ein hier als Außensechskant ausgebildetes Außenprofil 17 am freien Ende des Verstellelements 16 kann das als Verstellspindel ausgeführte Verstellelement 16 zur gegenseitigen Verstellung der beiden Spannbacken 11 und 12 gedreht werden. Anstelle des als Außensechskant ausgebildeten Außenprofils 17 können auch andere Kupplungslösungen, wie z.B. Keilwellen, Klauenaufsätze, 4-Kant-Verbindungen oder Wellen mit Zapfenaufsätzen verwendet werden.

Wie aus Figur 2 hervorgeht, weist der Grundkörper 13 zwei voneinander beabstandete Seitenwangen 18 und 19 mit oberen Führungsflächen 20 und 21 auf. Bei der gezeigten Ausführungsform befinden sich die beiden Führungsflächen 20 und 21 an gehärteten und geschliffenen Führungsleisten 22 und 23. Die Führungsflächen 20 und 21 können aber auch direkt an den Seitenwangen 18 und 19 vorgesehen sein. Zwischen den beiden Seitenwangen 18 und 19 des Grundkörpers 13 sind die beiden Schieber 14 und 15 eingepasst und verschiebbar geführt. An den beiden Stirnseiten des Grundkörpers 13 ist jeweils ein zur Kopplung mit der Greif- und Positioniereinrichtung 2 ausgebildetes Adapterstück 24 bzw. 25 befestigt. An der Unterseite des Grundkörpers 13 ist ferner ein in Figur 3 erkennbares Nullpunkt-Spannelement 26 angeordnet. Das hier als Spannzapfen ausgeführte Nullpunkt-Spannelement 26 kann Teil eines an sich bekannten Nullpunkt-Spannsystems zur genauen Positionierung und Halterung der Spannvorrichtung 1 sein. Über dieses Nullpunkt-Spannelement 26 kann die Spannvorrichtung 1 z.B. positionsgenau auf einen mit einer entsprechenden Aufnahme versehenen Maschinentisch einer Bearbeitungsmaschine gesetzt und durch eine geeignete Spannvorrichtung gespannt werden.

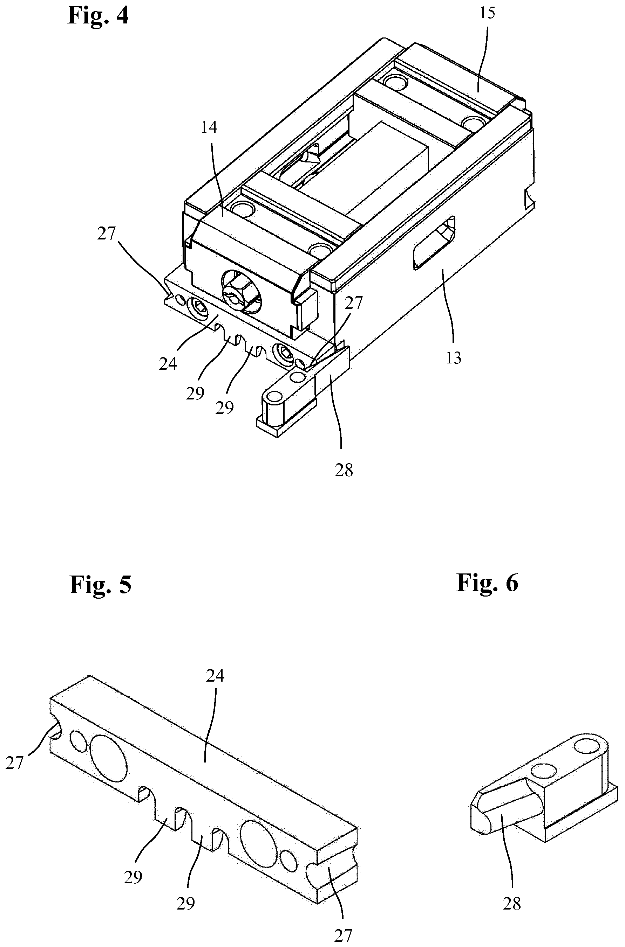

In Figur 4 ist erkennbar, dass die am Grundkörper 13 der Spannvorrichtung 1 befestigten Adapterstücke 24 bzw. 25 Ausnehmungen 27 zum formschlüssigen Eingriff von Ausrichtelementen 28 an der Greif- und Positioniereinrichtung 2 aufweisen. Bei dem in Figur 4 gezeigten Ausführungsbeispiel sind die Ausnehmungen 27 als keilförmige Einschnitte an den beiden Seiten eines Adapterstücks 24 bzw. 25 und die dazugehörigen Ausrichtelemente 28 als Keilstege ausgeführt. Die Ausrichtelemente 28 können aber auch kegelförmig oder als schräg angeordneter Zylinder und die zugehörigen Ausnehmungen 27 als Öffnungen mit konischem Querschnitt oder schrägen zylindrischen Flächen ausgeführt sein. Auch andere zueinander passende Profile sind möglich. An dem Adapterstück 24 bzw. 25 sind ferner zwei nach unten ragende Verriegelungsnasen 29 zur verriegelnden Halterung der Spannvorrichtung 1 an der Greif- und Positioniereinrichtung 2 vorgesehen.

In Figur 5 ist ein weiteres Ausführungsbeispiel eines Adapterstücks 24 und in Figur 6 ein dazugehöriges Ausrichtelement 28 gezeigt. Bei diesem Ausführungsbeispiel sind die Ausrichtelemente 28 als schräg angeordneter Zylinder und die dazugehörigen Ausnehmungen 27 am Adapterstück 24 als halbrunde Vertiefungen mit schrägen zylindrischen Flächen ausgeführt.

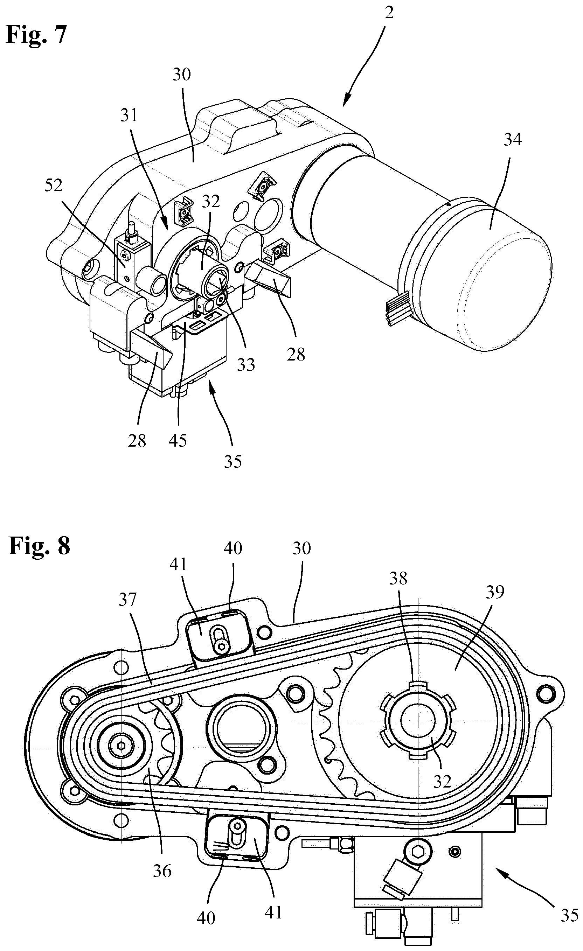

Die in Figur 7 gesondert dargestellte Greif- und Positioniereinrichtung 2 enthält ein Gehäuse 30, an dem die hier als Keilstege ausgeführten Ausrichtelemente 28 angeordnet sind. Die Greif- und Positioniereinrichtung 2 enthält ferner einen Antrieb 31, durch den die Spannvorrichtung 1 zwischen einer Spann- und Lösestellung bewegt werden kann. Der Antrieb 31 umfasst ein mit dem Verstellelement 16 der Spannvorrichtung 1 koppelbares Kupplungselement 32, das innerhalb des Gehäuses 30 drehbar und in Axialrichtung verschiebbar gelagert ist. Zur lösbaren Kupplung mit dem Verstellelement 16 und zu dessen Drehung weist das hier als Antriebsbuchse ausgebildete Kupplungselement 32 eine an die Außenkontur 17 an Ende des Verstellelements 16 angepasste Innenkontur 33 auf. Durch einen am Gehäuse 30 angeordneten Motor 34 mit einer ersten Getriebestufe und einer hier als Kettentrieb ausgebildetes zweiten Getriebestufe kann das Kupplungselement 32 zur Betätigung des Spannvorrichtung 1 gedreht werden. An dem Gehäuse 30 ist ferner eine mit den Verriegelungselementen 29 an den Adapterstücken 24 bzw. 25 der Spannvorrichtung 1 zusammenwirkende Verriegelungseinrichtung 35 zur verriegelnden Halterung der Spannvorrichtung 1 an der Greif- und Positioniereinrichtung 2 vorgesehen.

In Figur 8 ist der innerhalb des Gehäuses 30 untergebrachte Kettenantrieb zur Drehung des mit dem Verstellelement 16 kuppelbaren Kopplungselements 32 gezeigt. Der Kettentrieb enthält ein durch den Motor 34 angetriebenes Antriebsritzel 36, das über eine Gliederkette 37 mit einem über eine Keilwellenverbindung 38 mit der Antriebsbuchse 32 in Eingriff stehendes Abtriebszahnrad 39 verbunden ist. In dem Gehäuse 30 sind ferner zwei über Druckfedern 40 beaufschlagte Spannklötze 41 zum Spannen der Gliederkette 37 angeordnet.

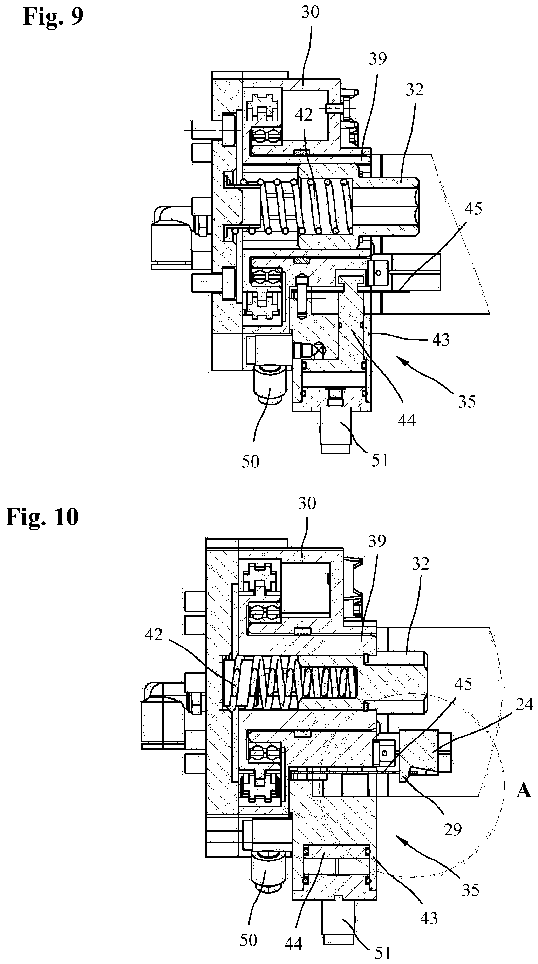

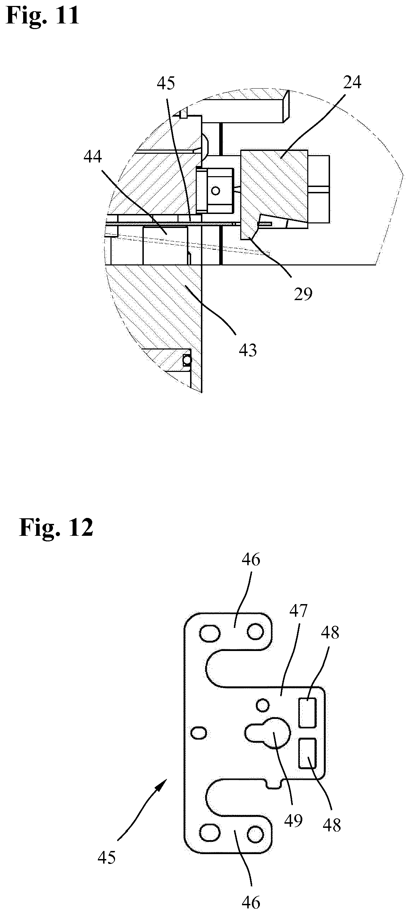

Aus der Schnittansicht von Figur 9 geht hervor, dass die Antriebsbuchse 32 innerhalb des im Gehäuse 30 drehbar gelagerten Abtriebszahnrads 39 über die Keilwellenverbindung 38 axial verschiebbar aber gegenüber dem Abtriebszahnrad 39 gegen Verdrehung gesichert geführt ist. Durch eine Druckfeder 42 wird die Antriebsbuchse 32 nach außen vorgespannt und kann daher entgegen der Kraft der Druckfeder 42 aus einer in Figur 9 gezeigten Ausfahrstellung in eine eingefahrene Stellung verschoben werden. Die Verriegelungseinrichtung 35 enthält einen innerhalb eines Gehäuses 43 verschiebbaren Kolben 44, durch den ein Verriegelungselement 45 zwischen einer in Figur 10 gezeigten Verriegelungsstellung und einer in Figur 11 mit gestrichelten Linien gezeigten Entriegelungsstellung bewegbar ist.

Das in Figur 12 gesondert dargestellte Verriegelungselement 45 ist bei dem gezeigten Ausführungsbeispiel als Blattfeder mit zwei äußeren Befestigungsteilen 46 und einem biegsamen Zwischenstück 47 ausgeführt. In dem biegsamen Zwischenstück 47 sind zwei Öffnungen 48 für die Aufnahme der beiden Verriegelungsnasen 29 an dem Adapterstück 24 bzw. 25 vorgesehen. In dem biegsamen Zwischenstück 47 ist ferner eine Öffnung 49 für das obere Ende des Kolbens 44 angeordnet. Die Verriegelung kann aber auch als Gelenkstück mit Haken, als kragender Kolben oder als Greiferarme gestaltet sein.

In der Verriegelungsstellung von Figur 10 befindet sich das als Blattfeder ausgeführte Verriegelungselement 45 in seiner nicht nach unten gebogenen oberen Verriegelungsstellung und die Verriegelungsnasen 29 am Adapterstück 24 oder 25 greifen in die Öffnungen 48 ein. Dadurch wird die Verbindung zwischen der Spannvorrichtung 1 und der Greif- und Positioniereinrichtung 2 sicher fixiert. Wird das Verriegelungselement dagegen durch entsprechende Beaufschlagung des Kolbens 44 mit Druckluft oder einem anderen Druckmedium nach unten gebogen, gibt das Verriegelungselement 45 die Verriegelungsnasen 29 an dem Adapterstück 24 bzw. 25 frei und die Verbindung zwischen der Spannvorrichtung 1 und der Greif- und Positioniereinrichtung 2 kann getrennt werden. Wird der Kolben 44 über den Anschluss 50 mit einem Druckmedium beaufschlagt, wird das Verriegelungselement 45 nach unten gebogen und gibt die Verriegelungsnasen 29 an dem Adapterstück 24 bzw. 25 frei. Wird der Kolben 44 dagegen über den Anschluss 51 mit einem Druckmedium beaufschlagt, gelangt das Verriegelungselement 45 in die obere Verriegelungsstellung.

Aus Figur 7 ist ersichtlich, dass an dem Gehäuse 30 der Greif- und Positioniereinrichtung 2 ein Distanzsensor 52 zur Erfassung der Öffnungsweite der Spannvorrichtung 1 bzw. der Position der Schieber 14 bzw. 15 angeordnet ist. Über den Distanzsensor 52 und eine Datentabelle, in der die Backenbreite abgelegt ist, kann der Abstand zwischen den Spannbacken 11 und 12 berechnet und der Motor 34 entsprechend angesteuert werden. Die Spannvorrichtung 1 kann in die gewünschte Öffnungsweite gefahren und ein Werkstück gegriffen und gespannt werden. Nach dem Schließen der Spannvorrichtung 1 kann die Öffhungsweite der Spannvorrichtung 1 durch den Distanzsensor 52 kontrolliert werden. Durch die Überwachung des Abstands zwischen den Spannbacken 11 und 12 kann die Position in Breitenrichtung und die Werkstückbreite überwacht werden. Vorzugsweise wird für die Distanzüberwachung ein optischer, kapazitiver, Ultraschall- oder ein Lasersensor eingesetzt.

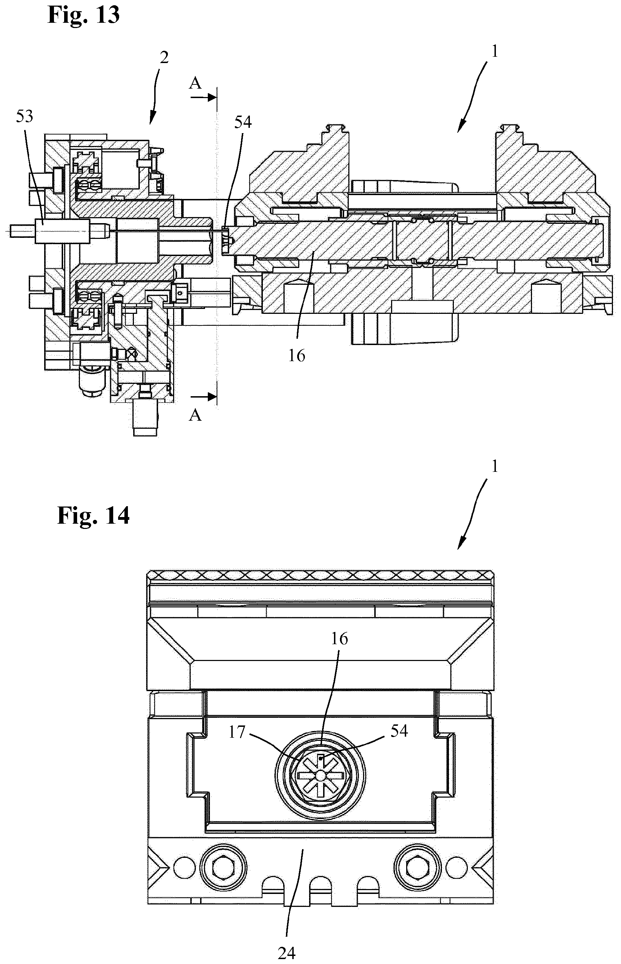

In den Figuren 13 und 14 ist eine Alternative zu dem gefederten Kupplungselement 32 bei der in Figur 9 und 10 gezeigten Ausführung gezeigt. Bei der alternativen Ausführung ist das mit dem als Verstellspindel ausgebildeten Verstellelement 16 der Spannvorrichtung koppelbare Kupplungselement 32 nicht gefedert und nicht axial verschiebbar innerhalb des Gehäuses 30 der Greif- und Positioniereinrichtung 2 angeordnet. Über einen Sensor 53 kann die Position des Verstellelements 16 erfasst und der Drehantrieb zur Ankopplung motorisch korrigiert werden. Der Sensor 53 kann z.B. ein innerhalb des hohlen Kupplungselements 32 angeordneter optischer Sensor zur Erfassung einer Markierung bzw. eines Messpunktes 54 am Außenprofil 17 des Verstellelements 16 sein.

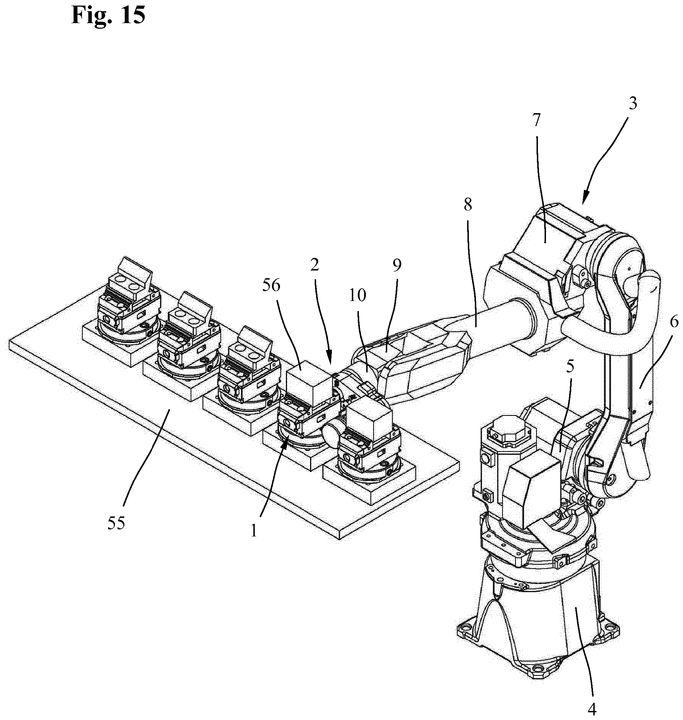

Mit der vorstehend beschriebenen Spann- und Handhabungseinrichtung kann gemäß Figur 15 z.B. eine Spannvorrichtung 1 zusammen mit einem an einer Bereitstellungsstation 55 manuell gespannten Werkstück 56 von der Bereitstellungsstation 55 zu einem Bearbeitungstisch 59 einer Bearbeitungsmaschine transportiert werden, wie dies in Figur 1 gezeigt ist.

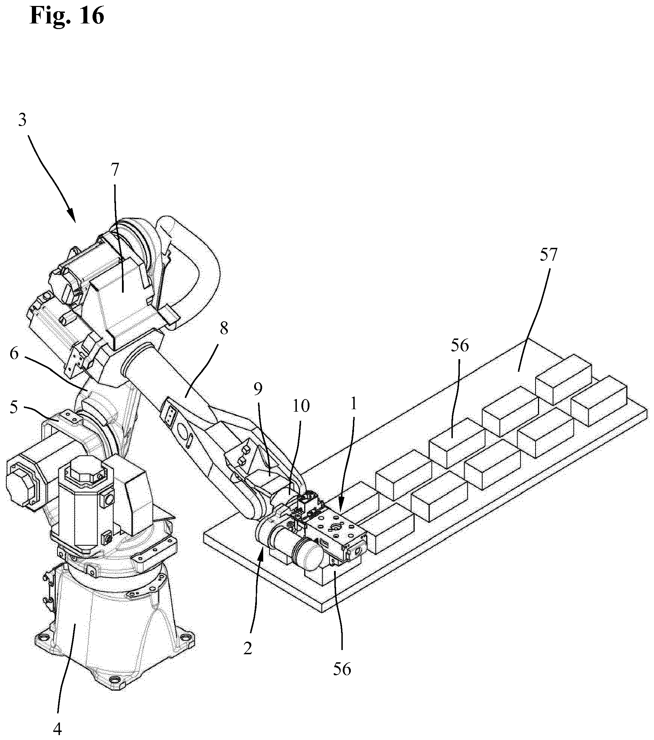

Durch die Spann- und Handhabungseinrichtung mit der an einem Roboter 3 montierten Greif- und Positioniereinrichtung 2 und der mit dieser gekoppelten Spannvorrichtung 1 kann durch entsprechende Drehung der Greif- und Positioniereinrichtung 2 gemäß Figur 16 aber auch ein Werkstück 56 von einem Werkstückspeicher oder einer Ablage 57 abgeholt und zu einem Bearbeitungstisch einer Werkzeugmaschine transportiert werden. Die Spannvorrichtung 1 kann daher kombiniert als Spann- und Greifeinheit verwendet werden.

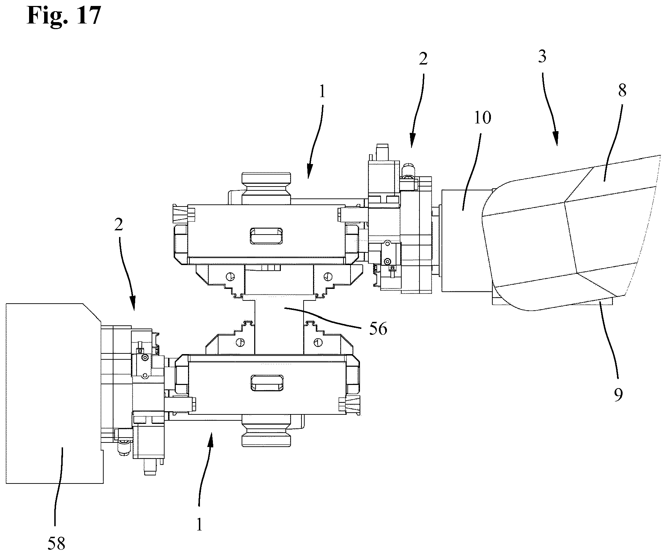

Wie in Figur 17 gezeigt ist, kann durch eine zusätzliche Greif- und Positioniereinrichtung 2 ein Werkstück 56 von einer ersten Bearbeitungsoperation in die Aufspannung einer zweiten Bearbeitungsoperation umgespannt werden. Dabei transportiert der mit einer ersten Greif- und Positioniereinrichtung 2 versehene Roboter 3 zunächst eine leere erste Spannvorrichtung 1 zu einer fest installierten zweiten Greif- und Positioniereinrichtung 2, die z.B. an einem Befestigungsplatz 58 außerhalb eines Maschinenraums angeordnet sein kann. Nach der Übergabe der leeren ersten Spannvorrichtung 1 an die fest installierte zweite Positioniereinrichtung 2 holt der Roboter 3 mit der ersten Greif- und Positioniereinrichtung 2 eine zweite Spannvorrichtung 1 mit einem einseitig bearbeiteten Werkstück 56, bewegt sich bzw. schwenkt über die leere erste Spannvorrichtung 1 an der fest installierten zweiten Greif- und Positioniereinrichtung 2 und übergibt das Werkstück an die erste Spannvorrichtung 1. Nach dem Ablegen der nunmehr leeren zweiten Spannvorrichtung 1 kann die jetzt beladene erste Spannvorrichtung 1 von der fest installierten zweiten Positioniereinrichtung 2 abgekoppelt und zu einer Bearbeitungsposition in einer Bearbeitungsmaschine transportiert werden.

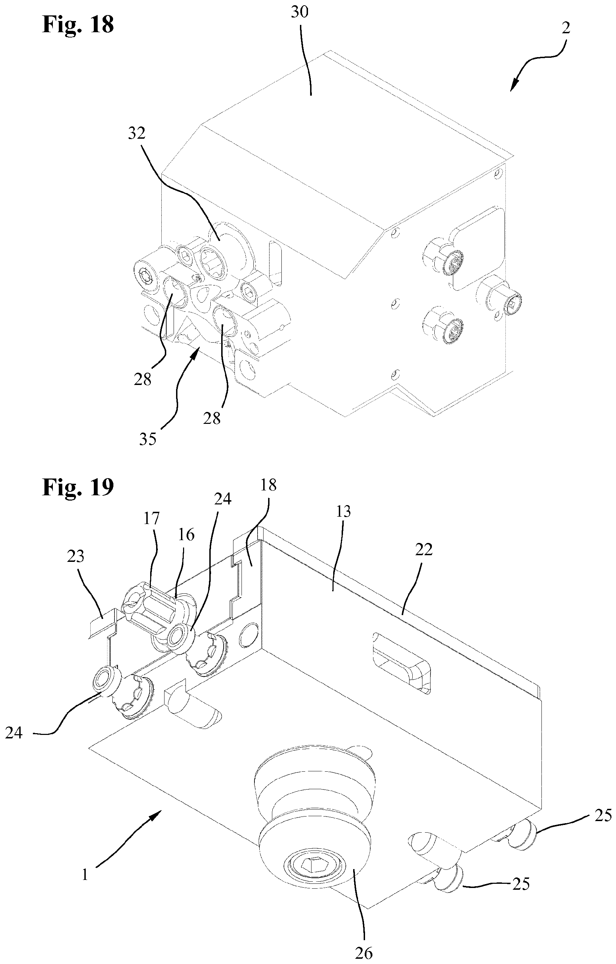

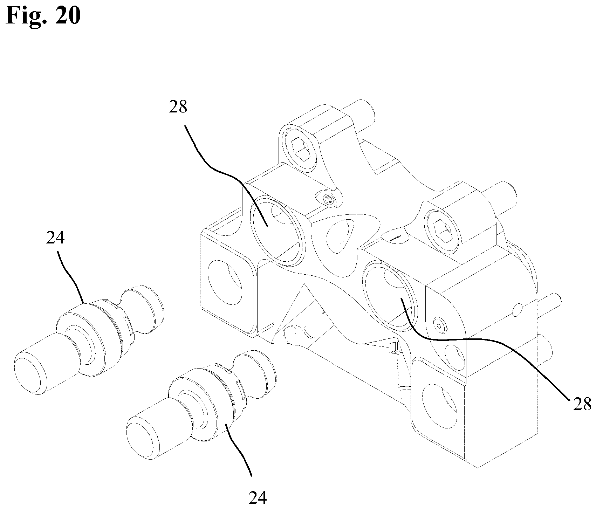

In Figur 18 ist eine zweite Ausgestaltung einer Greif- und Positioniereinheit 2 und in Figur 19 eine mit dieser verbindbare zweite Ausgestaltung einer Spannvorrichtung 1 gezeigt. Der Übersicht halber sind in den Figuren 18 und 19 nur die wesentlichen Bezugszeichen eingezeichnet. Der wesentliche Unterschied zu den bisher gezeigten Ausführungsformen ist dabei durch die in Figur 20 näher bzw. für sich gezeigte Ausgestaltung der Kopplungseinrichtung bzw. der Ausrichteelemente 28 der Greif- und Positioniereinheit 2 sowie der Ausgestaltung der Adapterstücke 24, 25 der Spannvorrichtung 1 gegeben. Die am Grundkörper 13 der Spannvorrichtung 1 befestigten Adapterstücke 24, 25 sind hierbei als jeweils zwei im Wesentlichen konusförmige Stifte zum formschlüssigen Eingriff in die als Ausnehmungen ausgebildeten Ausrichteelemente 28 der Greif- und Positioniereinheit 2 ausgebildet. Neben den in den Figuren 18 bis 20 gezeigten Ausgestaltungen der Adapterstücke 24, 25 und der Ausrichteelemente 28 sind dabei auch andere zueinander passende Profile möglich. Weiter weist auch die in Figur 18 gezeigte Greif- und Positioniereinrichtung 2 eine hier nicht näher dargestellte Verriegelungseinrichtung 35 zur verriegelnden Halterung der Spannvorrichtung 1 auf, wobei die Verriegelungseinrichtung 35 beispielsweise ein durch einen Kolben gegen die konusförmigen Stifte verschiebbares Verriegelungselement umfassen kann.

### Bezugszeichenliste

- 1: Spannvorrichtung
- 2: Greif- und Positioniereinrichtung
- 3: Roboter
- 4: Ständer
- 5: Karussell
- 6: Schwinge
- 7: Arm
- 8: Erstes Handteil
- 9: Zweites Handteil
- 10: Drittes Handteil
- 11: Spannbacke
- 12: Spannbacke
- 13: Grundkörper
- 14: Schieber
- 15: Schieber
- 16: Verstellelement
- 17: Außenprofil
- 18: Seitenwange
- 19: Seitenwange
- 20: Führungsfläche
- 21: Führungsfläche
- 22: Führungsleiste
- 23: Führungsleiste
- 24: Adapterstück
- 25: Adapterstück
- 26: Spannzapfen
- 27: Ausnehmung
- 28: Ausrichtelement
- 29: Verriegelungsnase
- 30: Gehäuse
- 31: Antrieb
- 32: Kupplungselement
- 33: Innenkontur
- 34: Motor
- 35: Verriegelungseinrichtung
- 36: Antriebsritzel
- 37: Gliederkette
- 38: Keilwellenverbindung
- 39: Abtriebzahnrad
- 40: Druckfeder
- 41: Spannklotz
- 42: Druckfeder
- 43: Gehäuse
- 44: Kolben
- 45: Verriegelungselement
- 46: Äußere Befestigungsteile
- 47: Biegsames Zwischenstück
- 48: Öffnung
- 49: Öffnung
- 50: Anschluss
- 51: Anschluss
- 52: Distanzsensor
- 53: Sensor
- 54: Messpunkt
- 55: Bereitstellungsstation
- 56: Werkstück
- 57: Ablage
- 58: Befestigungsplatz
- 59: Bearbeitungstisch

## Patentansprüche

1. Spann- und Handhabungseinrichtung mit einer Spannvorrichtung (1) zur festen Halterung eines Werkstücks während einer Bearbeitung und einer mit der Spannvorrichtung (1) lösbar verbindbaren Greif- und Positioniereinrichtung (2) zum Transport der Spannvorrichtung (1) zwischen unterschiedlichen Positionen, wobei die Greif- und Positioniereinrichtung (2) eine Kopplungseinrichtung (28, 35) zur lösbaren Verbindung der Greif- und Positioniereinrichtung (2) mit der Spannvorrichtung (1) und festen Halterung der Spannvorrichtung (1) während eines Transports umfasst, und wobei die Spannvorrichtung (1) als Schraubstock mit einem Grundkörper (13) und mindestens zwei Spannbacken (11, 12) ausgeführt ist und mindestens ein Nullpunkt-Spannelement (26) zur Positionierung und Halterung auf einem Bearbeitungstisch (52) sowie mindestens ein Adapterstück (24, 25) zur Verbindung mit der Kopplungseinrichtung (28, 35) der Greif- und Positioniereinrichtung (2) enthält, **dadurch gekennzeichnet, dass** die Greif- und Positioniereinrichtung (2) einen integrierten Antrieb (31) zur Bewegung der Spannvorrichtung (1) zwischen einer Spann-und Lösestellung umfasst.

2. Spann- und Handhabungseinrichtung nach Anspruch 1, **dadurch gekennzeichnet, dass** die Kopplungseinrichtung (28, 35) der Greif- und Positioniereinrichtung (2) eines oder mehrere Ausrichteelemente (28) zur formschlüssigen Verbindung mit der Spannvorrichtung (1) umfasst.

3. Spann- und Handhabungseinrichtung nach Anspruch 1 oder 2, **dadurch gekennzeichnet, dass** der Antrieb (31) ein durch einen Motor (34) drehbares Kupplungselement (32) zur Kopplung mit einem Verstellelement (16) der Spannvorrichtung (1) enthält.

4. Spann- und Handhabungseinrichtung nach Anspruch 3, **dadurch gekennzeichnet, dass** das Kupplungselement (32) durch den Motor (34) über ein Getriebe (36, 37, 39) drehbar ist.

5. Spann- und Handhabungseinrichtung nach Anspruch 3 oder 4, **dadurch gekennzeichnet, dass** das Kupplungselement (32) in einem Gehäuse (30) drehbar gelagert ist.

6. Spann- und Handhabungseinrichtung nach Anspruch 5, **dadurch gekennzeichnet, dass** das Kupplungselement (32) innerhalb des Gehäuses (30) axial verschiebbar und federnd vorgespannt ist.

7. Spann- und Handhabungseinrichtung nach Anspruch 6, **dadurch gekennzeichnet, dass** dem Kupplungselement (32) ein Sensor (53) zur Erfassung der Position des Verstellelements (16) der Spannvorrichtung (1) zugeordnet ist.

8. Spann- und Handhabungseinrichtung nach einem der Ansprüche 5 bis 7, **dadurch gekennzeichnet, dass** an dem Gehäuse (30) ein Distanzsensor (52) zur Erfassung der Öffhungsweite der Spannvorrichtung (1) angeordnet ist.

9. Spann- und Handhabungseinrichtung nach einem der Ansprüche 1 bis 8, **dadurch gekennzeichnet, dass** die Kopplungseinrichtung (28, 35) eine Verriegelungseinrichtung (35) zur verriegelbaren Halterung der Spannvorrichtung (1) umfasst.

10. Spann- und Handhabungseinrichtung nach Anspruch 9, **dadurch gekennzeichnet, dass** die Verriegelungseinrichtung (35) ein mittels eines Kolbens (44) zwischen einer Verriegelungsstellung und einer Entriegelungsstellung bewegbares Verriegelungselement (45) enthält.

11. Spann- und Handhabungseinrichtung nach Anspruch 10, **dadurch gekennzeichnet, dass** das Verriegelungselement (45) mehrere Öffnungen (48) zur Aufnahme von Verriegelungsnasen (29) an der Spannvorrichtung (1) enthält.

12. Spann- und Handhabungseinrichtung nach Anspruch 2, **dadurch gekennzeichnet, dass** die Ausrichtelemente (28) als Keilstege, als Konus oder Zylinder zum Eingriff in entsprechende keilförmige, konische oder zylindrische Ausnehmungen (27) an der Spannvorrichtung (1) ausgebildet sind und/ oder, dass die Ausrichteelemente (28) als Ausnehmungen zur Aufnahme von Keilstegen oder konusförmigen oder zylinderförmigen Elementen der Spannvorrichtung (1) ausgebildet sind.

13. Spann- und Handhabungseinrichtung nach einem der Ansprüche 1 bis 12, **dadurch gekennzeichnet, dass** die Greif- und Positioniereinrichtung (2) an einem Industrieroboter (3) befestigbar oder Teil eines Industrieroboters (3) ist.

14. Spann- und Handhabungseinrichtung nach einem der voranstehenden Ansprüche, **dadurch gekennzeichnet, dass** die Spannvorrichtung (1) zwei gegenüberliegende Adapterstücke (24, 25) zur Verbindung mit der Kopplungseinrichtung (28, 35) der Greif- und Positioniereinrichtung (2) enthält.

15. Spann- und Handhabungseinrichtung nach Anspruch 14, **dadurch gekennzeichnet, dass** die Adapterstücke an den Stirnseiten des Grundkörpers (13) befestigt sind.

16. Spann- und Handhabungseinrichtung nach einem der voranstehenden Ansprüche, **dadurch gekennzeichnet, dass** das Nullpunkt-Spannelement auf der Unterseite des Grundkörpers (13) angeordnet ist.

17. Verfahren zum Handhaben einer Spannvorrichtung an einer Bearbeitungsmaschine, **dadurch gekennzeichnet, dass** eine Spannvorrichtung (1) zur festen Halterung eines Werkstücks während der Bearbeitung durch eine mit der Spannvorrichtung (1) über eine Kopplungseinrichtung (28, 35) lösbar verbundene Greif- und Positioniereinrichtung (2) mit integrierten Antrieb (31) zur Bewegung der Spannvorrichtung (1) zwischen einer Spann- und einer Lösestellung zu einem Werkstück (54) verfahren wird, dass das Werkstück (54) von der Spannvorrichtung (1) durch Betätigung des in der Greif- und Positioniereinrichtung (2) integrierten Antriebs (31) gegriffen wird und dass die Spannvorrichtung (1) mit dem gegriffenen Werkstück (54) über die Greif- und Positioniereinrichtung (2) zu einer Bearbeitungsposition in der Bearbeitungsmaschine transportiert wird.

18. Verfahren nach Anspruch 17, **dadurch gekennzeichnet, dass** die Spannvorrichtung (1) ein Nullpunkt-Spannelement (26) aufweist, über das die Spannvorrichtung (1) positionsgenau auf einen mit einer entsprechenden Aufnahme für das Nullpunkts-Spannelement (26) versehenen Maschinentisch einer Bearbeitungsmaschine gesetzt und durch eine geeignete Spannvorrichtung gespannt wird.

19. Verfahren nach Anspruch 17, **dadurch gekennzeichnet, dass** mit einer ersten Greif- und Positioniereinrichtung (2) zunächst eine leere erste Spannvorrichtung (1) zu einer fest installierten zweiten Greif- und Positioniereinrichtung (2) transportiert wird, dass mit der ersten Greif- und Positioniereinrichtung (2) nach der Übergabe der leeren ersten Spannvorrichtung (1) an die fest installierte zweite Greif-Positioniereinrichtung (2) eine zweite Spannvorrichtung (1) mit einem einseitig bearbeiteten Werkstück (56) abgeholt, diese über die leere erste Spannvorrichtung (1) an der fest installierten zweiten Greif- und Positioniereinrichtung (2) bewegt und das Werkstück (56) an die erste Spannvorrichtung (1) übergeben wird und nach dem Ablegen der nunmehr leeren zweiten Spannvorrichtung (1) die jetzt beladene erste Spannvorrichtung (1) von der fest installierten zweiten Positioniereinrichtung (2) abgekoppelt und zu einer Bearbeitungsposition in der Bearbeitungsmaschine transportiert wird.

## Claims

1. Clamping and operating arrangement with a clamping device (1) for firm mounting of a workpiece during processing and a gripping and positioning arrangement (2), which is connectable to the clamping device (1) to be releasable, for transport of the clamping device (1) between different positions, wherein the gripping and positioning arrangement (2) comprises a coupling arrangement (28, 35) for releasable connection of the gripping and positioning arrangement (2) to the clamping device (1) and firm mounting of the clamping device (1) during transport, and wherein the clamping device (1) is made as a vice with a base body (13) and at least two clamping jaws (11, 12) and has at least one zero-point clamping element (26) for positioning and mounting on a processing table (52) and at least one adapter piece (24, 25) for connection with the coupling arrangement (28, 35) of the gripping and positioning arrangement (2), **characterised in that** the gripping and positioning arrangement (2) comprises an integrated drive (31) for moving the clamping device (1) between a clamping position and release position.

2. Clamping and operating arrangement according to claim 1, **characterised in that** the coupling arrangement (28, 35) of the gripping and positioning arrangement (2) comprises one or more aligning elements (28) for positive connection with the clamping device (1).

3. Clamping and operating arrangement according to claim 1 or 2, **characterised in that** the drive (31) has a coupling element (32), which is rotatable by a motor (34), for coupling with an adjusting element (16) of the clamping device (1).

4. Clamping and operating arrangement according to claim 3, **characterised in that** the coupling element (32) is rotatable by the motor (34) via a gear (36, 37, 39).

5. Clamping and operating arrangement according to claim 3 or 4, **characterised in that** the coupling element (32) is mounted to be rotatable in a housing (30).

6. Clamping and operating arrangement according to claim 5, **characterised in that** the coupling element (32) is pretensioned to be axially displaceable and resilient within the housing (30).

7. Clamping and operating arrangement according to claim 6, **characterised in that** a sensor (53) for detecting the position of the adjusting element (16) of the clamping device (1) is assigned to the coupling element (32).

8. Clamping and operating arrangement according to one of claims 5 to 7, **characterised in that** a distance sensor (52) for detecting the opening width of the clamping device (1) is arranged on the housing (30).

9. Clamping and operating arrangement according to one of claims 1 to 8, **characterised in that** the coupling arrangement (28, 35) comprises a locking device (35) for lockable mounting of the clamping device (1).

10. Clamping and operating arrangement according to claim 9, **characterised in that** the locking device (35) has a locking element (45) which is movable by means of a piston (44) between a locking position and an unlocking position.

11. Clamping and operating arrangement according to claim 10, **characterised in that** the locking element (45) has several openings (48) for receiving locking projections (29) on the clamping device (1).

12. Clamping and operating arrangement according to claim 2, **characterised in that** the aligning elements (28) are formed as wedge bars, as a cone or cylinder for engagement in corresponding wedge-shaped, conical or cylindrical recesses (27) on the clamping device (1) and/or **in that** the aligning elements (28) are formed as recesses for receiving wedge bars or conical or cylindrical elements of the clamping device (1).

13. Clamping and operating arrangement according to one of claims 1 to 12, **characterised in that** the gripping and positioning arrangement (2) is attachable to an industrial robot (3) or part of an industrial robot (3).

14. Clamping and operating arrangement according to one of the preceding claims, **characterised in that** the clamping device (1) has two opposing adapter pieces (24, 25) for connection with the coupling arrangement (28, 35) of the gripping and positioning arrangement (2).

15. Clamping and operating arrangement according to claim 14, **characterised in that** the adapter pieces are attached to the end-face sides of the base body (13).

16. Clamping and operating arrangement according to one of the preceding claims, **characterised in that** the zero-point clamping element is arranged on the underside of the base body (13).

17. Method for operating a clamping device on a processing machine, **characterised in that** a clamping device (1) is moved to a workpiece (54) for firm mounting of a workpiece during processing by a gripping and positioning arrangement (2), which is connectable to the clamping device (1) to be releasable via a coupling arrangement (28, 35), with integrated drive (31) for movement of the clamping device (1) between a clamping position and a release position, **in that** the workpiece (54) is gripped by the clamping device (1) by actuating the drive (31) integrated in the gripping and positioning arrangement (2) and **in that** the clamping device (1) with the gripped workpiece (54) is transported to a processing position in the processing machine via the gripping and positioning arrangement (2).

18. Method according to claim 17, **characterised in that** the clamping device (1) has a zero-point clamping element (26), via which the clamping device (1) is placed to be positionally exact on a machine table of a processing machine provided with a corresponding receiver for the zero-point clamping element (26) and clamped by a suitable clamping device.

19. Method according to claim 17, **characterised in that** using a first gripping and positioning arrangement (2), first of all an empty first clamping device (1) is transported to a firmly installed second gripping and positioning arrangement (2), **in that** using the first gripping and positioning arrangement (2), after delivery of the empty first clamping device (1) to the firmly installed second gripping and positioning arrangement (2), a second clamping device (1) with a workpiece (56) processed on one side is collected, the latter is moved via the empty first clamping device (1) to the firmly installed second gripping and positioning arrangement (2) and the workpiece (56) is delivered to the first clamping device (1) and after removal of the at this point empty second clamping device (1), the now charged first clamping device (1) is uncoupled from the firmly installed second positioning device (2) and transported to a processing position in the processing machine.

## Revendications

1. Système de serrage et de manipulation avec un dispositif de serrage (1) pour le support fixe d'une pièce à usiner pendant un usinage et un système de préhension et de positionnement (2) pouvant être relié de manière amovible au dispositif de serrage (1) pour le transport du dispositif de serrage (1) entre des positions différentes, dans lequel le système de préhension et de positionnement (2) comporte un dispositif de couplage (28, 35) pour la liaison amovible du dispositif de préhension et de positionnement (2) avec le dispositif de serrage (1) et le support fixe du dispositif de serrage (1) pendant un transport, et dans lequel le dispositif de serrage (1) est réalisé comme étau avec un corps de base (13) et au moins deux mâchoires de serrage (11, 12) et contient au moins un élément de serrage à point zéro (26) pour le positionnement et le support sur une table d'usinage (52) ainsi qu'au moins une pièce d'adaptateur (24, 25) pour la liaison avec le dispositif de couplage (28, 35) du système de préhension et de positionnement (2), **caractérisé en ce que** le système de préhension et de positionnement (2) comporte un entraînement (31) intégré pour le mouvement du dispositif de serrage (1) entre une position de serrage et de détachement.

2. Système de serrage et de manipulation selon la revendication 1, **caractérisé en ce que** le dispositif de couplage (28, 35) du système de préhension et de positionnement (2) comporte un ou plusieurs éléments d'orientation (28) pour la liaison à complémentarité de formes avec le dispositif de serrage (1).

3. Système de serrage et de manipulation selon la revendication 1 ou 2, **caractérisé en ce que** l'entraînement (31) contient un élément de couplage (32) rotatif par un moteur (34) pour le couplage avec un élément de réglage (16) du dispositif de serrage (1).

4. Système de serrage et de manipulation selon la revendication 3, **caractérisé en ce que** l'élément de couplage (32) est rotatif par le moteur (34) par le biais d'un engrenage (36, 37, 39).

5. Système de serrage et de manipulation selon la revendication 3 ou 4, **caractérisé en ce que** l'élément de couplage (32) est logé de manière à pouvoir tourner dans un boîtier (30).

6. Système de serrage et de manipulation selon la revendication 5, **caractérisé en ce que** l'élément de couplage (32) est précontraint de manière axialement mobile et par ressort dans le boîtier (30).

7. Système de serrage et de manipulation selon la revendication 6, **caractérisé en ce qu'un** capteur (53) est associé à l'élément de couplage (32) pour la détection de la position de l'élément de réglage (16) du dispositif de serrage (1).

8. Système de serrage et de manipulation selon l'une des revendications 5 à 7, **caractérisé en ce qu'un** capteur de distance (52) est agencé au niveau du boîtier (30) pour la détection de la largeur d'ouverture du dispositif de serrage (1).

9. Système de serrage et de manipulation selon l'une des revendications 1 à 8, **caractérisé en ce que** le dispositif de couplage (28, 35) comporte un dispositif de verrouillage (35) pour le support verrouillable du dispositif de serrage (1).

10. Système de serrage et de manipulation selon la revendication 9, **caractérisé en ce que** le dispositif de verrouillage (35) contient un élément de verrouillage (45) mobile au moyen d'un piston (44) entre une position de verrouillage et une position de déverrouillage.

11. Système de serrage et de manipulation selon la revendication 10, **caractérisé en ce que** l'élément de verrouillage (45) contient plusieurs ouvertures (48) pour la réception de nez de verrouillage (29) au niveau du dispositif de serrage (1).

12. Système de serrage et de manipulation selon la revendication 2, **caractérisé en ce que** les éléments d'orientation (28) sont réalisés comme clavettes, comme cônes ou cylindres pour la mise en prise dans des évidements (27) cunéiformes, coniques ou cylindriques correspondants au niveau du dispositif de serrage (1) et/ou que les éléments d'orientation (28) sont réalisés comme évidements pour la réception de clavettes ou éléments coniques ou cylindriques du dispositif de serrage (1).

13. Système de serrage et de manipulation selon l'une des revendications 1 à 12, **caractérisé en ce que** le système de préhension et de positionnement (2) peut être fixé à un robot industriel (3) ou fait partie d'un robot industriel (3).

14. Système de serrage et de manipulation selon l'une des revendications précédentes, **caractérisé en ce que** le dispositif de serrage (1) contient deux pièces d'adaptateur (24, 25) opposées pour la liaison avec le dispositif de couplage (28, 35) du système de préhension et de positionnement (2).

15. Système de serrage et de manipulation selon la revendication 14, **caractérisé en ce que** les pièces d'adaptateur sont fixées aux côtés avant du corps de base (13).

16. Système de serrage et de manipulation selon l'une des revendications précédentes, **caractérisé en ce que** l'élément de serrage à point zéro est agencé sur le côté inférieur du corps de base (13).

17. Procédé de manipulation d'un dispositif de serrage au niveau d'une machine d'usinage, **caractérisé en ce qu'**un dispositif de serrage (1) est déplacé pour le support fixe d'une pièce à usiner pendant l'usinage par un système de préhension et de positionnement (2) relié de manière amovible au dispositif de serrage (1) par le biais d'un dispositif de couplage (28, 35) avec entraînement intégré (31) pour le déplacement du dispositif de serrage (1) entre une position de serrage et une position de détachement vers une pièce à usiner (54), que la pièce à usiner (54) est prise par le dispositif de serrage (1) par actionnement de l'entraînement (31) intégré dans le système de préhension et de positionnement (2) et que le dispositif de serrage (1) est transporté avec la pièce à usiner (54) prise par le biais du dispositif de préhension et de positionnement (2) vers une position d'usinage dans la machine d'usinage.

18. Procédé selon la revendication 17, **caractérisé en ce que** le dispositif de serrage (1) présente un élément de serrage à point zéro (26), par le biais duquel le dispositif de serrage (1) est placé en position précise sur une table de machine pourvue d'un logement correspondant pour l'élément de serrage à point zéro (26) d'une machine d'usinage et est serré par un dispositif de serrage approprié.

19. Procédé selon la revendication 17, **caractérisé en ce qu'**avec un premier système de préhension et de positionnement (2) un premier dispositif de serrage (1) vide est tout d'abord transporté vers un second système de préhension et de positionnement (2) installé fixement, qu'avec le premier système de préhension et de positionnement (2) après la remise du premier dispositif de serrage (1) vide au second système de préhension et de positionnement (2) fixement installé un second dispositif de serrage (1) est recherché avec une pièce à usiner (56) usinée d'un côté, celui-ci est déplacé par le biais du premier dispositif de serrage (1) vide au niveau du second système de préhension et de positionnement (2) fixement installé et la pièce à usiner (56) est remise au premier dispositif de serrage (1) et après le dépôt du second dispositif de serrage (1) désormais vide le premier dispositif de serrage (1) maintenant chargé est découplé du second système de positionnement (2) fixement installé et est transporté vers une position d'usinage dans la machine d'usinage.
